# EUROPEAN PATENT SPECIFICATION

(11) **EP 0 556 505 B1**
(45) Date of publication and mention of the grant of the patent: **24.07.1996**
(21) Application number: 92307729.1
(22) Date of filing: 25.08.1992
(51) Int. Cl.: E05B 27/08

(54) **Axial pin tumbler lock**
Schloss mit axial angeordneten Stiftzuhaltungen
Serrure avec broches à gorges à montage axial

(30) Priority: 20.12.1991 US 811787; 06.03.1992 US 847197
(43) Date of publication of application: 25.08.1993
(73) Proprietor: Lu, Den-Yi, Kaohsiung Hsien (TW)
(72) Inventor: Huang, Tzong-Chyuan, Feng-Shan City, Kaohsiung Hsien (TW)
(74) Representative: Richards, David John

(56) References cited:
- EP-A- 0 139 796
- EP-A- 0 385 808
- DE-A- 2 949 643
- DE-B- 2 344 285

## Description

This invention relates to an axial pin tumbler lock which can be easily locked without the need of a key.

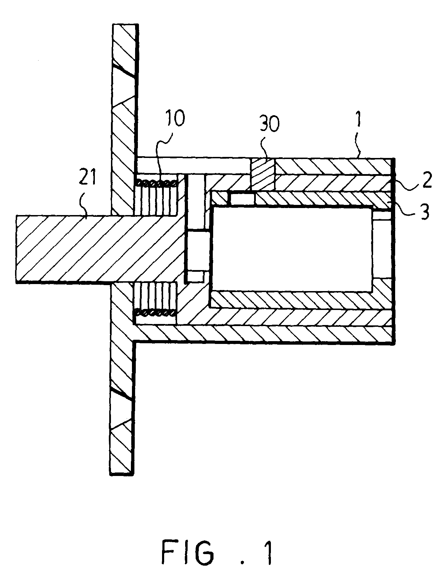

The improvement of this invention is directed to the conventional locks shown in Figs. 1, 2 and 3. Referring to Fig. 1, a conventional lock includes an outer shell (1), an inner shell (2), a key plug (3), a coiled spring (10) and a tumbler element (30). When one desires to open the lock, an associated key must be inserted into the lock so as to move the tumbler element (30) to a predetermined position, thereby enabling the spring (10) to move the locking bar (21).

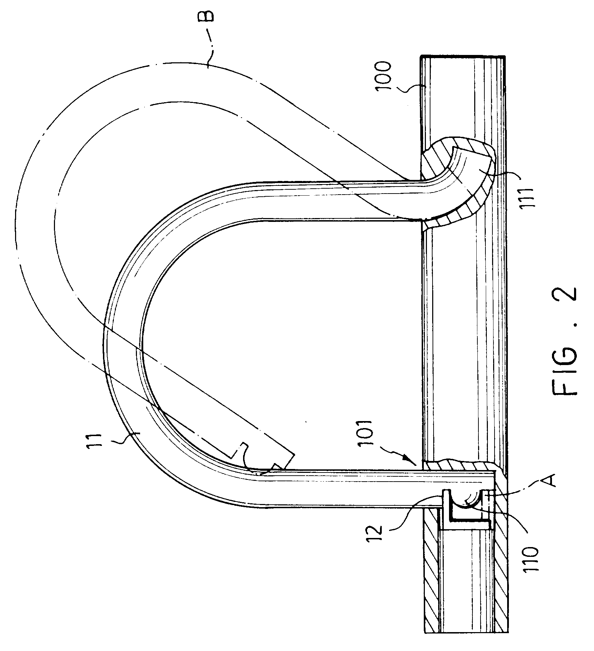

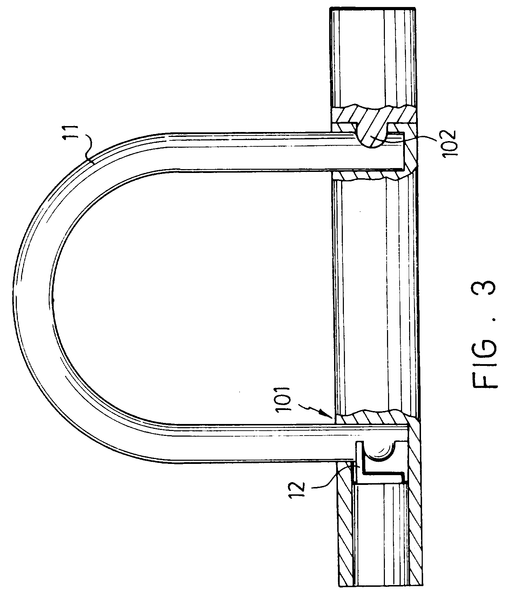

Referring to Figs. 2 and 3, another conventional lock for bicycles and motorcycles includes a tubular rod body (100) and a shackle (11) with two legs extending into the lock holes (101) of the rod body (10). The rod body (100) has a projection (102) which is well-matched with a notch of the curved end of the shackle (10) so as to retain the shackle (11) on the rod body (100). The other end of the shackle (11) is straight and is provided with a protrusion (110). When the lock is in its locking position, an L-shaped retaining piece (12) is at the position indicated by solid lines in Fig. 1 and limits the projection (110) of the shackle (11) in the rod body (100). When one desires to open the lock, an associate key is inserted into the device and is operated so as to move the retaining piece (12) to the position indicated by phantom lines (A) in Fig. 2. Subsequently, the straight end of the shackle (11) is pulled upward to the position indicated by phantom lines (B) in Fig. 2. When locking these locks, keys must be inserted into the locks, resulting in inconvenient locking operations.

DE-A-2949643 discloses an axial pin tumbler lock, including a tubular housing; a fixed hollow cylinder secured in said housing and having several axial bores formed in an end surface of said fixed hollow cylinder; a rotatable cylinder, mounted rotatably in said housing, abutting against and coaxial with said fixed hollow cylinder including several axial bores formed through said rotatable cylinder in alignment with said bores of said fixed hollow cylinder; a locking bar movable in said tubular housing between a locked position and an unlocked position; and several tumbler units respectively received in said bores of said fixed and rotatable cylinders, each of said tumbler units consisting of a first tumbler pin positioned in said rotatable cylinder, a second tumbler pin spanning a shear line between said fixed and rotatable cylinders, and a tumbler spring positioned in said fixed hollow cylinder so as to bias said first tumbler pin to extend from said bore of said rotatable cylinder, at least two of said first tumbler pins having different lengths.

An aim of this invention is to provide an axial pin tumbler lock which can be easily locked without the necessity of a key.

The present invention provides an axial pin tumbler lock including:
a tubular housing;
a fixed hollow cylinder secured in said housing and having several axial bores formed in an end surface of said fixed hollow cylinder;
a rotatable cylinder, mounted rotatably in said housing, abutting against and coaxial with said fixed hollow cylinder including several axial bores formed through said rotatable cylinder in alignment with said bores of said fixed hollow cylinder;
a locking bar movable in said tubular housing between a locked position and an unlocked position; and
several tumbler units respectively received in said bores of said fixed and rotatable cylinders, each of said tumbler units consisting of a first tumbler pin positioned in said rotatable cylinder, a second tumbler pin spanning a shear line between said fixed and rotatable cylinders, and a tumbler spring positioned in said fixed hollow cylinder so as to bias said first tumbler pin to extend from said bore of said rotatable cylinder, at least two of said first tumbler pins having different lengths;
characterized by:
the rotatable cylinder (6) being hollow and having a guide pin mounted securely therein transverse to the axis thereof;
the locking bar being disposed rotatably in said housing and being received axially in both said rotatable and said fixed hollow cylinders (5,6) to be axially slidable between the locked position and the unlocked position in said housing, said locking bar having an actuated end extending from an end of said housing, a latching end located in said housing, an axially extending slide slot formed in said locking bar so that said guide pin is received slidably in said slide slot, and a positioning hole formed in said locking bar, engagement of said guide pin in said slide slot enabling synchronous rotation of said rotatable hollow cylinder and said locking bar;
a resilient element biasing said actuated end of said locking bar to extend from said housing so as to position said locking bar in said unlocked position; and
a spring-loaded retaining element provided in said fixed hollow cylinder and located radially with respect to the locking bar axis so as to be biased to press against said locking bar;
whereby, when said actuated end of said locking bar is pushed into said housing, said spring-loaded retaining element engages in said positioning hole of said locking bar so as to position said locking bar in said locked position, thereby extending said latching end of said locking bar from said housing; when said locking bar is in said locked position, insertion and rotation of an associated key in said lock positions said first and second tumbler pins of each of said tumbler units on two sides of the shear line so that said locking bar rotates synchronously with said rotatable hollow cylinder, thereby disengaging said spring-loaded retaining element from said positioning hole of said locking bar, disengagement of said spring-loaded retaining element from said positioning hole causing said resilient element to push said actuated end of said locking bar to extend from said housing.

Preferably, said locking bar is in the form of a hollow cylinder, said actuated end of said locking bar being closed, said latching end of said locking bar being open, said slide slot being formed through a wall of said locking bar, said guide pin extending into said locking bar, said resilient element being a coiled compression spring which is positioned between said guide pin and said closed end of said locking bar in said locking bar so as to push said closed end of said locking bar to extend from said housing.

An embodiment of the present invention will be described, by way of example only, with reference to the accompanying drawings in which:
Fig. 1 is a sectional view of a conventional lock;
Figs. 2 and 3 illustrate another conventional lock;
Fig. 4 is an exploded view of an axial pin tumbler lock in accordance with an embodiment of this invention;
Figs. 5 and 6 are sectional views illustrating how a guide pin retains a locking bar in the axial pin tumbler lock according to the embodiment of this invention;
Fig. 7 is a sectional view illustrating the position of a spring-loaded retaining element relative to the locking bar in the axial pin tumbler lock according to the embodiment of this invention;
Fig. 8 is a sectional view illustrating how to locate the locking bar in a locked position in the axial pin tumbler lock according to the embodiment of this invention;
Fig. 9 shows a key to be used with the axial pin tumbler lock according to the embodiment of this invention;
Fig. 10 is an exploded view of a lock arrangement incorporating the axial pin tumbler lock according to the embodiment of this invention; and
Figs. 11 and 12 illustrate the locking position of the lock arrangement shown in Fig. 10.

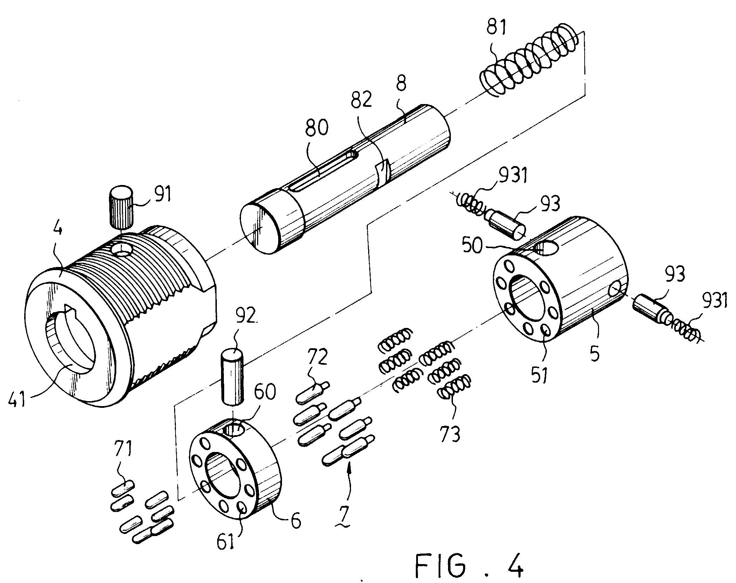

Referring to Fig. 4, an axial pin tumber lock in accordance with an embodiment of this invention includes a tubular housing (4), a fixed hollow cylinder (5), a rotatable hollow cylinder (6), several tumbler units (7) and a locking bar (8).

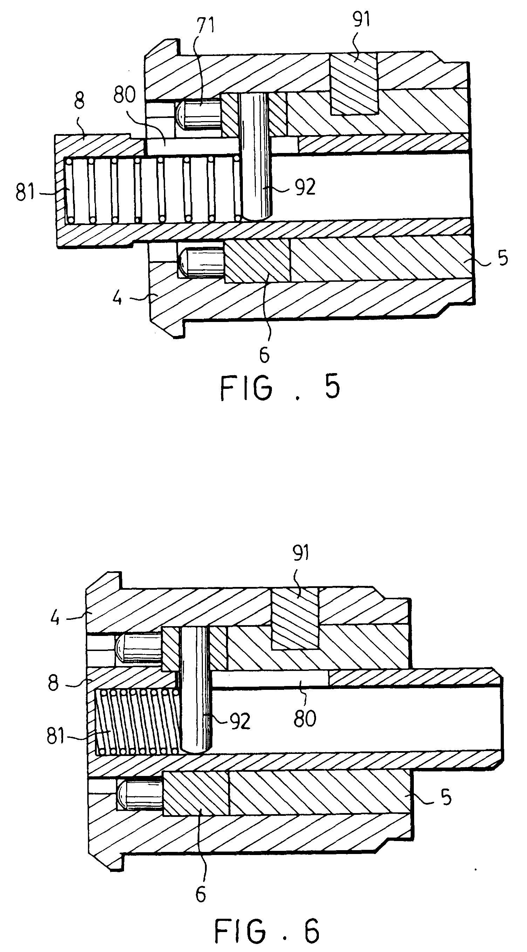

The housing (4) has a radially extending flange (41) projecting inwardly and outwardly from an end thereof. A securing pin (91) is passed through the housing (4) and the hole (50) of the fixed hollow cylinder (5) so as to secure the fixed hollow cylinder (5) to the housing (4). The locking bar (8) is shaped in the form of a hollow cylinder. As best shown in Figs. 5 and 6, a guide pin (92) extends through the rotatable hollow cylinder (6) and the axially extending slide slot (80) of the locking bar (8) so as to retain the locking bar (8) on the lock in such a manner that the locking bar (8) can slide relative to the rotatable hollow cylinder (6). A coiled compression spring (81) is interposed between the guide pin (92) and the end wall of the locking bar (8) in the locking bar (8) so as to bias the actuated end or closed end of the locking bar (8) to extend from the housing (4), thereby locating the locking bar (8) in an unlocked position.

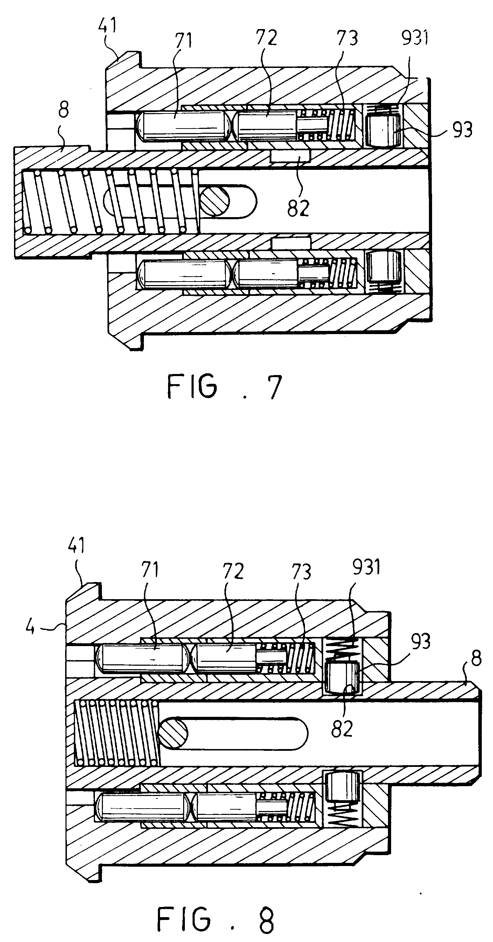

As best shown in Fig. 7, a spring-loaded retaining element (93) is retained on the fixed hollow cylinder (5) and is biased by a spring (931) to press against the outer surface of the locking bar (8). One can push the actuated end of the locking bar (8) to move inward until the retaining element (93) engages with the positioning hole (82) of the locking bar (8). As shown in Fig. 8, the engagement of the retaining element (93) in the positioning hole (82) locates the locking bar (8) in a locked position in which the latching end or open end of the locking bar (8) extends from the housing (4).

Again referring to Fig. 4, several axial bores (51) are formed in an end surface of the fixed hollow cylinder (5) which contacts the rotatable hollow cylinder (6). The rotatable hollow cylinder (6) also has several axial bores (61) formed therethrough in alignment with the bores (51) of the fixed hollow cylinder (5). As best shown in Figs. 5 and 6, each of the tumbler units (7) is received in the bores (51 and 61) and consists of a first tumbler pin (71) positioned in the bore (61) of the rotatable hollow cylinder (6), a second tumbler pin (72) spanning a shear line between the fixed hollow cylinder (5) and the rotatable hollow cylinder (6), and a tumbler spring (73) biasing the first tumbler pin (71) to extend from the bore (61). The first tumbler pins (71) have different lengths.

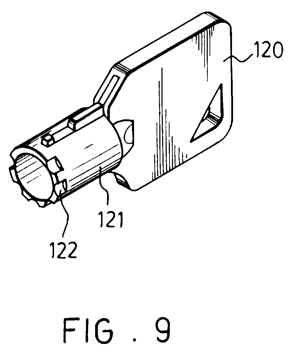

Fig. 9 shows a key (120) which is associated with the lock of this invention. As illustrated, the key (120) has a sleeve-like operating portion (121) which is formed with several key cuts (122) of different sizes. The sizes of the key cuts (122) are determined according to the positions and lengths of the first tumbler pins (71). Referring to Fig. 6, when one desires to open the lock, the key (120) is inserted into the space between the flange (41) of the housing (4) and the actuated end of the locking bar (8) so as to engage the first tumbler pins (71) with the key cuts (122) of the key (120), thereby positioning the first and second tumbler pins (71, 72) of each of the tumbler units (7) on two sides of the shear line between the fixed hollow cylinder (5) and the rotatable hollow cylinder (6). At this time, the engagement of the first tumbler pins (71) in the key cuts (122) enables synchronous rotation of the rotatable hollow cylinder (6) and the key (120). Subsequently, the key (120) is turned to rotate the locking bar (8) synchronously with the rotatable hollow cylinder (6) so as to disengage the spring-loaded retaining element (93) from the positioning hole (82) of the locking bar (8). As a consequence, the latching end of the locking bar (8) is pulled by the coiled compression spring (81) into the housing (4) so as to urge the actuated end of the locking bar (8) to extend from the housing (4).

Because the size of the coiled compression spring (81) is reduced in comparison with that of the spring (10) of the conventional lock shown in Fig. 1, the volume of the lock of this invention can be reduced so as to increase the application range of the lock. Furthermore, the lock of this invention can be easily locked without the need of a key.

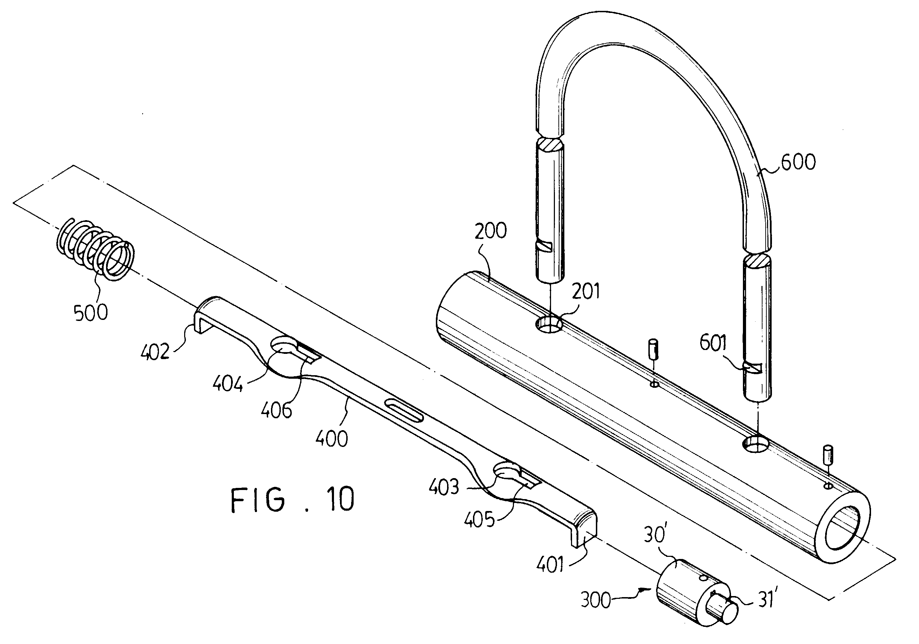

Referring to Fig. 10, the illustrated lock arrangement includes a hollow cylindrical rod body (200) having an open end and a closed end, a lock unit (300) disposed in the open end of the rod body (200), an elongated locking plate assembly (400) pushed toward the lock unit (300) by a resilient element (500), and a lock bar assembly (600). In this arrangement, the resilient element (500) is a coiled compression spring (500) which is placed between the locking plate assembly (400) and the end wall of the rod body (200). The lock bar assembly (600) is a shackle which has two parallel legs or retaining bars with aligned notches (601).

The rod body (200) has two axially aligned through holes (201) which are formed through a wall thereof. The lock unit (300) incorporates an axial pin tumbler lock as shown above in Figure 4. The tubular housing (30') is fixed in the rod body (200), and the locking bar (31') extends through and movable in the housing (30'). The locking plate assembly (400) has a first vertical end wall (401) abutting against the lock unit (300), a second vertical end wall (402) abutting against the acting or pushing end of the resilient element (500), and two locking holes formed through the locking plate assembly (400). Each of the locking holes has a large-sized circular portion (403, 404) and a small-sized rectangular portion (405, 406). The shackle (600) has two parallel legs with aligned notches (601). The legs of the shackle (600) extend through the through holes (201) of the rod body (200) and the locking holes of the locking plate assembly (400). The lower ends of the legs of the shackle (600) rest on the inner surface of the rod body (200) in such a manner that the notches (601) are aligned with the locking holes of the locking plate assembly (400).

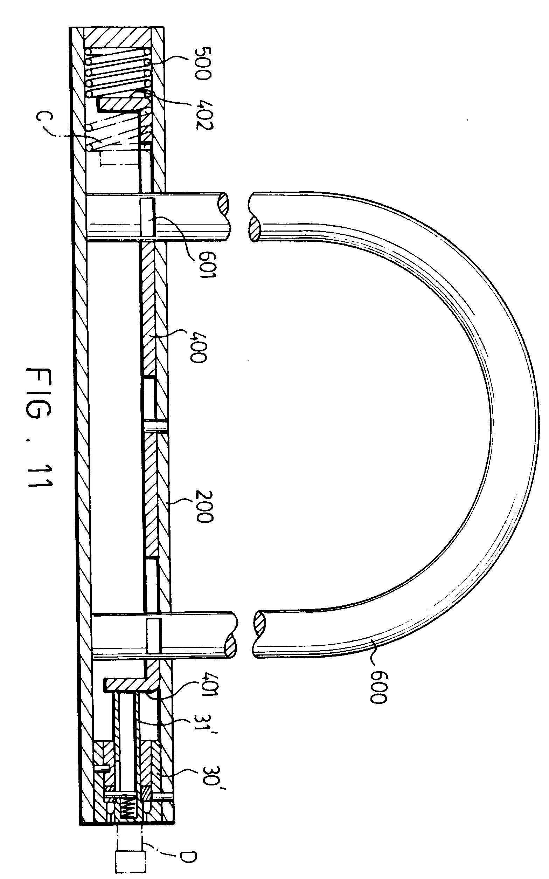

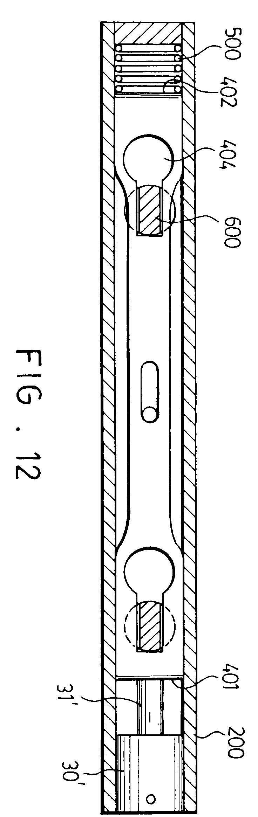

Referring to Fig. 11, the locking bar (31') can be moved between the locked position indicated by the solid lines and the unlocked position indicated by the phantom lines. Fig. 12 is a sectional view illustrating the locked position of the locking bar (31'). When in the locked position, the locking bar (31') partially extends from the inner end of the housing (30') and is locked in the housing (30'). This extension of the locking bar (31') moves the locking plate assembly (400) to the left so as to engage the legs of the shackle (600) in the small-sized portions of the locking holes in the locking plate assembly (400), thereby compressing the resilient element (500) between the locking plate assembly (400) and the left end wall of the rod body (200). Accordingly, the shackle (600) cannot be removed from the rod body (200).

When an associated key is inserted into the open end of the rod body (200) and is operated so as to unlock the locking bar (31') from the housing (30'), the resilient element (500) moves to a stretched position indicated by phantom lines (C) so as to move the locking plate assembly (400) and the locking bar (31') to the unlocked position indicated by phantom lines (D), where the right end portion of the locking bar (31') extends from the outer end of the housing (30').

When one desires to open the lock, an associated key (see Fig. 9) is inserted into the lock unit (300).

This lock arrangement has a number of applications. For example, the lock can be used on the steering wheel of an automobile, motorcycles, bicycles, etc.

## Claims

1. An axial pin tumbler lock including:
a tubular housing (4,30') ;
a fixed hollow cylinder (5) secured in said housing (4,30') and having several axial bores (51) formed in an end surface of said fixed hollow cylinder (5);
a rotatable cylinder (6), mounted rotatably in said housing (4,30'), abutting against and coaxial with said fixed hollow cylinder (5) including several axial bores (61) formed through said rotatable cylinder (6) in alignment with said bores (51) of said fixed hollow cylinder (5);
a locking bar (8,31') movable in said tubular housing (4,30') between a locked position and an unlocked position; and
several tumbler units (7) respectively received in said bores (51,61) of said fixed and rotatable cylinders (5,6), each of said tumbler units (7) consisting of a first tumbler pin (71) positioned in said rotatable cylinder (6), a second tumbler pin (72) spanning a shear line between said fixed and rotatable cylinders (5,6), and a tumbler spring (73) positioned in said fixed hollow cylinder (5) so as to bias said first tumbler pin (71) to extend from said bore (61) of said rotatable cylinder (6), at least two of said first tumbler pins (71) having different lengths;
characterized by:
the rotatable cylinder (6) being hollow and having a guide pin (92) mounted securely therein transverse to the axis thereof;
the locking bar (8,31') being disposed rotatably in said housing (4,30') and being received axially in both said rotatable and said fixed hollow cylinders (5,6) to be axially slidable between the locked position and the unlocked position in said housing (4,30'), said locking bar (8,31) having an actuated end extending from an end of said housing (4,30'), a latching end located in said housing (4,30'), an axially extending slide slot (80) formed in said locking bar (8,31') so that said guide pin (92) is received slidably in said slide slot (80), and a positioning hole (82) formed in said locking bar (8,31'), engagement of said guide pin (92) in said slide slot (80) enabling synchronous rotation of said rotatable hollow cylinder (6) and said locking bar (8,31');
a resilient element (81) biasing said actuated end of said locking bar (8,31') to extend from said housing (4,30') so as to position said locking bar (8,31') in said unlocked position; and
a spring-loaded retaining element (93) provided in said fixed hollow cylinder (5) and located radially with respect to the locking bar axis so as to be biased to press against said locking bar (8,31');
whereby, when said actuated end of said locking bar (8,31') is pushed into said housing (4,30'), said spring-loaded retaining element (93) engages in said positioning hole (82) of said locking bar (8,31') so as to position said locking bar (8,31') in said locked position, thereby extending said latching end of said locking bar (8,31') from said housing (4,30'); when said locking bar (8,31') is in said locked position, insertion and rotation of an associated key (120) in said lock positions said first and second tumbler pins (71,72) of each of said tumbler units (7) on two sides of the shear line so that said locking bar (8,31') rotates synchronously with said rotatable hollow cylinder (6), thereby disengaging said spring-loaded retaining element (93) from said positioning hole (82) of said locking bar (8,31'), disengagement of said spring-loaded retaining element (93) from said positioning hole (82) causing said resilient element (81) to push said actuated end of said locking bar (8,31') to extend from said housing (4,30').

2. A lock as claimed in claim 1, wherein said locking bar (8,31') is in the form of a hollow cylinder, said actuated end of said locking bar (8,31') being closed, said latching end of said locking bar (8,31') being open, said slide slot (80) being formed through a wall of said locking bar (8,31'), said guide pin (92) extending into said locking bar (8,31'), said resilient element (81) being a coiled compression spring which is positioned between said guide pin (92) and said closed end of said locking bar (8,31') in said locking bar (8,31') so as to push said closed end of said locking bar (8,31') to extend from said housing (4,30').

## Patentansprüche

1. Ein Schloß mit axial angeordneten Stiftzuhaltungen, aufweisend:
ein rohrförmiges Gehäuse (4,30');
einen feststehenden Hohlzylinder (5), der in dem genannten Gehäuse (4,30') befestigt ist und mehrere axiale Bohrungen (51) aufweist, die in einer Endseite des genannten feststehenden Hohlzylinders (5) ausgebildet sind;
einen drehbaren Zylinder (6), der in dem genannten Gehäuse (4,30') in drehbarer Weise angeordnet ist, gegen den genannten feststehenden Hohlzylinder (5) zum Anschlag gelangt und mit dem genannten feststehenden Hohlzylinder (5) koaxial ist, wobei der drehbare Zylinder (6) mehrere axiale Bohrungen (61) aufweist, welche durch den genannten drehbaren Zylinder (6) hindurch in Ausrichtung mit den genannten Bohrungen (51) des genannten feststehenden Hohlzylinders (5) ausgebildet sind;
einen Sperrstift (8,31'), der in dem genannten rohrförmigen Gehäuse (4,30') zwischen einer verriegelten Position und einer entriegelten Position bewegbar ist;
und mehrere Zuhaltungseinheiten (7), die jeweils in den genannten Bohrungen (51 bzw. 61) des genannten feststehenden Zylinders (5) bzw. des genannten drehbaren Zylinders (6) aufgenommen sind, wobei jede der genannten Zuhaltungseinheiten (7) aufweist: einen ersten Zuhaltungsstift (71), der in dem genannten drehbaren Zylinder (6) angeordnet ist, einen zweiten Zuhaltungsstift (72), der eine Abscherungsebene zwischen dem genannten feststehenden Zylinder (5) und dem genannten drehbaren Zylinder (6) spannt, und eine Zuhaltungsfeder (73), die in dem genannten feststehenden Hohlzylinder (5) angeordnet ist, so daß der genannte erste Zuhaltungsstift (71) vorgespannt wird, um sich von der genannten Bohrung (61) des genannten drehbaren Zylinders (6) zu erstrecken, wobei wenigstens zwei der genannten ersten Zuhaltungsstifte (71) unterschiedliche Längen aufweisen;
gekennzeichnet durch:
der drehbare Zylinder (6) ist hohl und weist einen Führungsstift (92) auf, welcher quer zu der Achse des drehbaren Zylinders (6) in gesicherter Weise in diesem angeordnet ist;
der Sperrstift (8,31') ist in dem genannten Gehäuse (4,30') drehbar angeordnet und axial sowohl in dem genannten drehbaren Zylinder (6) als auch in dem genannten feststehenden Hohlzylinder (5) aufgenommen, um zwischen der verriegelten Position und der entriegelten Position in dem genannten Gehäuse (4,30') axial verschiebbar zu sein, wobei der genannte Sperrstift (8,31) aufweist:
ein betätigtes Ende, das sich von einem Ende des genannten Gehäuses (4, 30') erstreckt, ein Verriegelungsende, das in dem genannten Gehäuse (4,30') angeordnet ist, einen sich axial erstreckenden Gleitschlitz (80), der in dem genannten Sperrstift (8,31') ausgebildet ist, so daß der genannte Führungsstift (92) in dem genannten Gleitschlitz (80) verschiebbar aufgenommen ist, sowie eine Positionierungsöffnung (82), die in dem genannten Sperrstift (8,31') ausgebildet ist, wobei ein Eingriff des genannten Führungsstiftes (92) in dem genannten Gleitschlitz (80) eine synchrone Drehung des genannten drehbaren Hohlzylinders (6) und des genannten Sperrstiftes (8,31') ermöglicht;
ein federndes Element (81), welches das genannte betätigte Ende des genannten Sperrstiftes (8,31') so vorspannt, daß es sich von dem genannten Gehäuse (4,30') erstreckt, um den genannten Sperrstift (8,31') in der genannten entriegelten Position zu positionieren; und ein federbelastetes Halteelement (93), das in dem genannten feststehenden Hohlzylinder (5) vorgesehen und in Bezug auf die Achse des Sperrstiftes radial angeordnet ist, um so vorgespannt zu sein, daß es gegen den genannten Sperrstift (8,31') drückt;
so daß, wenn das genannte betätigte Ende des genannten Sperrstiftes (8,31') in das genannte Gehäuse (4,30') gedrückt wird, das genannte federbelastete Halteelement (93) in die genannte Positionierungsöffnung (82) des genannten Sperrstiftes (8,31') eingreift, um den genannten Sperrstift (8,31') in der genannten verriegelten Position zu positionieren, wodurch sich das genannte Verriegelungsende des genannten Sperrstiftes (8,31') von dem genannten Gehäuse (4,30') aus erstreckt; wenn der genannte Sperrstift (8,31') in der genannten verriegelten Position ist, ein Einführen eines zugeordneten Schlüssels (120) in das genannte Schloß und ein Drehen des Schlüssels (120) in dem genannten Schloß den genannten ersten Zuhaltungsstift (71) und den genannten zweiten Zuhaltungsstift (72) einer jeden der genannten Zuhaltungseinheiten (7) an zwei Seiten der Abscherungsebene positioniert, so daß sich der genannte Sperrstift (8,31') synchron mit dem genannten drehbaren Hohlzylinder (6) dreht, wodurch das genannte federbelastete Halteelement (93) aus der genannten Positionierungsöffnung (82) des genannten Sperrstiftes (8,31') außer Eingriff gebracht wird, wobei ein Außereingriffgelangen des genannten federbelasteten Halteelementes (93) aus der genannten Positionierungsöffnung (82) das genannte federnde Element (81) dazu veranlaßt, das genannte betätigte Ende des genannten Sperrstiftes (8,31') zu drücken, um sich von dem genannten Gehäuse (4,30') zu erstrecken.

2. Ein Schloß, wie in Anspruch 1 beansprucht, bei welchem der genannte Sperrstift (8,31') in der Form eines Hohlzyinders ist, wobei das genannte betätigte Ende des genannten Sperrstiftes (8,31') geschlossen ist, das genannte Verriegelungsende des genannten Sperrstiftes (8,31') offen ist, der genannte Gleitschlitz (80) durch eine Wand des genannten Sperrstiftes (8,31') hindurch ausgebildet ist, der genannte Führungsstift (92) sich in den genannten Sperrstift (8,31') hinein erstreckt, das genannte federnde Element (81) eine Schraubendruckfeder ist, die zwischen dem genannten Führungsstift (92) und dem genannten geschlossenen Ende des genannten Sperrstiftes (8,31') in dem genannten Sperrstift (8,31') positioniert ist, um das genannte geschlossene Ende des genannten Sperrstiftes (8,31') zu drücken, um sich von dem genannten Gehäuse (4,30') zu erstrecken.

## Revendications

1. Serrure à gorge et à broches axiales, comprenant :
un logement tubulaire (4, 30')
un cylindre creux fixe (5) monté dans ledit logement (4, 30') et comportant plusieurs trous axiaux (51) réalisés dans une surface extrême dudit cylindre creux fixe (5) ;
un cylindre rotatif (6) monté rotatif dans ledit logement (4, 30'), en butée contre le, et coaxial audit, cylindre creux fixe (5), comprenant plusieurs trous axiaux (61) réalisés de part en part dans ledit cylindre rotatif (6) et à l'alignement desdits trous (51) dudit cylindre creux fixe (5) ;
une barre de verrouillage (8, 31') mobile dans ledit logement tubulaire (4, 30') entre une position de verrouillage et une position de déverrouillage ; et
plusieurs modules d'arrêt (7) logés respectivement dans lesdits trous (51, 61) desdits cylindres fixe et rotatif (5, 6), chacun desdits modules d'arrêt (7) consistant en une première broche d'arrêt (71) placée dans ledit cylindre rotatif (6), en une seconde broche d'arrêt (72) passant par une ligne d'effort de cisaillement située entre lesdits cylindres fixe et rotatif (5, 6), ainsi qu'en un ressort d'arrêt (73) placé dans ledit cylindre creux fixe (5) de façon à repousser ladite première broche d'arrêt (71) de façon qu'elle déborde dudit trou (61) dudit cylindre rotatif (6), au moins deux desdites premières broches d'arrêt (71) ayant des longueurs différentes ;
caractérisée en ce que
le cylindre rotatif (6) est creux et une broche de guidage (92) est montée en position fixe dans ce dernier perpendiculairement à son axe, la barre de verrouillage (8, 31') étant montée rotative dans ledit logement (4, 30') et étant logée axialement aussi bien dans ledit cylindre rotatif que dans ledit cylindre fixe creux (5, 6) de manière à être coulissante axialement entre la position de verrouillage et la position de déverrouillage dans ledit logement (4, 30'), ladite barre de verrouillage (8, 31) ayant une extrémité actionnée qui déborde d'une extrémité dudit logement (4, 30'), une extrémité de loquetage placée dans ledit logement (4, 30'), une fente de coulissement (80) orientée axialement étant réalisée dans ladite barre de verrouillage (8, 31') de façon que ladite broche de guidage (92) soit logée coulissante dans ladite fente de coulissement (80) et un trou de positionnement (82) étant réalisé dans ladite barre de verrouillage (8, 31'), la pénétration de ladite broche de guidage (92) dans ladite fente de guidage (80) permettant une rotation synchrone dudit cylindre creux rotatif (6) et de ladite barre de verrouillage (8, 31') ;
un élément élastique (81) repoussant ladite extrémité actionnée de ladite barre de verrouillage (8, 31') pour la faire déborder dudit logement (4, 30') de façon à positionner ladite barre de verrouillage (8, 31') à ladite position de déverrouillage ; et
un élément de retenue (93) soumis à la force d'un ressort étant disposé dans ledit cylindre creux fixe (5) et placé radialement par rapport à l'axe de la barre de verrouillage de façon qu'il soit repoussé de manière à exercer une pression contre ladite barre de verrouillage (8, 31')
de façon que, lorsque ladite extrémité actionnée de ladite barre de verrouillage (8, 31') est poussée dans ledit logement (4, 30'), ledit élément de retenue (93) soumis à la force d'un ressort pénètre dans ledit trou de positionnement (82) de ladite barre de verrouillage (8, 31') de façon à mettre ladite barre de verrouillage (8, 31') à ladite position de verrouillage, de manière à faire déborder ladite extrémité de loquetage de ladite barre de verrouillage (8, 31') dudit logement (4, 30') lorsque la barre de verrouillage (8, 31') est à ladite position de verrouillage, l'introduction et la rotation d'une clé associée (120) dans ladite serrure positionnent lesdites première et seconde broches d'arrêt (71, 72) de chacun desdits modules d'arrêt (7) sur deux côtés de la ligne d'effort de cisaillement de façon que ladite barre de verrouillage (8, 31') tourne en synchronisme avec ledit cylindre creux rotatif (6) de manière à dégager ledit élément de retenue (93), qui est soumis à la force d'un ressort, dudit trou de positionnement (82) de ladite barre de verrouillage (8, 31'), le dégagement dudit élément de retenue (93), qui est soumis à la force d'un ressort, dudit trou de positionnement (82) ayant pour conséquence que ledit élément élastique (81) pousse ladite extrémité actionnée de ladite barre de verrouillage (8, 31') de façon qu'elle déborde dudit logement (4, 30') .

2. Serrure selon la revendication 1, dans laquelle ladite barre de verrouillage (8, 31') est en forme d'un cylindre creux, ladite extrémité actionnée de ladite barre de verrouillage (8, 31') étant fermée, ladite extrémité de loquetage de ladite barre de verrouillage (8, 31') étant ouverte, ladite fente de coulissement (80) étant réalisée à travers une paroi de ladite barre de verrouillage (8, 31'), ladite broche de guidage (92) pénétrant dans ladite barre de verrouillage (8, 31'), ledit élément élastique (81) étant un ressort hélicoïdal de compression qui est placé entre ladite broche de guidage (92) et ladite extrémité fermée de ladite barre de verrouillage (8, 31') dans ladite barre de verrouillage (8, 31') de manière à pousser ladite extrémité fermée de ladite barre de verrouillage (8, 31') de façon qu'elle déborde dudit logement (4, 30').
